# EUROPÄISCHE PATENTSCHRIFT

(11) **EP 1 512 454 B1**
(45) Veröffentlichungstag und Bekanntmachung des Hinweises auf die Patenterteilung: **07.01.2009**
(21) Anmeldenummer: 04020984.3
(22) Anmeldetag: 03.09.2004
(51) Int. Cl.: B01D 53/83, B01D 53/85, B01D 53/08

(54) **Vorrichtung zum Reinigen von Abluft aus landwirtschaftlichen Anlagen**
Apparatus for the purification of waste gases from agricultural plants
Dispositif pour la purification des gaz des installations agricoles

(30) Priorität: 04.09.2003 DE 20313713 U
(43) Veröffentlichungstag der Anmeldung: 09.03.2005
(73) Patentinhaber: Lammers Systemtechnik GmbH & Co. KG, 26901 Rastdorf (DE)
(72) Erfinder: Lammers, Dietrich, 26901 Rastdorf (DE)
(74) Vertreter: Bünemann, Egon

(56) Entgegenhaltungen:
- EP-A- 0 095 999
- WO-A-94/08697
- DE-A- 2 256 963
- DE-A- 3 331 225
- DE-A- 19 961 691
- DE-C- 825 393
- US-A- 4 255 403

## Beschreibung

Die Erfindung betrifft eine Vorrichtung zum Reinigen von Schadgase enthaltender Abluft, insbesondere aus landwirtschaftlichen Anlagen, gemäß dem Oberbegriff des Anspruchs 1.

Bei einem gemäß DE 196 09 053 C1 bekannten Verfahren ist zum Reinigen von Abluft eine Reinigungsvorrichtung vorgesehen, die nach Art eines Rieselbettreaktors eine kontinuierliche Entfernung von durch Schadgas-Teile der Abluft erzeugter Biomasse aus einem Granulat-Filtermaterial vorsieht. Die Vorrichtung besteht dabei aus einem einstückigen Filterbehälter, in dem sich das Filtermaterial als eine Granulat-Schüttung befindet. Zu deren Reinigung ist eine Wasser-Flutung des Filterbehälters vorgesehen, so daß ausgespülte Biomasse einem unter dem Filterbehälter befindlichen Vorratsgefäß zu- und aus diesem abgeführt wird. Gemäß DE 84 07 661 U1 ist eine Filtervorrichtung bekannt, bei der ebenfalls eine rohrförmige Filterkammer mit vertikal durchströmbarem Filtermaterial in Form von Granulat vorgesehen ist und ähnliche Vorrichtungen sind in DE 33 11 108 A1, DE 33 31 225 C2 und DE 36 36 467 C2 gezeigt, bei denen einer zentralen Filteranlage die Schadgas-Teile enthaltende Abluft in vertikaler bzw. axialer Richtung des Behälters zugeführt wird.

Gemäß DE 33 31 225, DE 2 256 963 und DE 199 61 691 sind Vorrichtungen zur Reinigung von industriellen Rauchgasen in Wanderbetten aus Granulat gezeigt, in US 4,255,403 und WO 94/08697 wird Rauchgas durch elektrostatische Aufladung des Wanderbett-Granulats gereinigt und gemäß DE 825 393 sowie EP 095 999 erfolgt eine Reinigung mittels Wasserdampf.

Die Erfindung befaßt sich mit dem Problem, eine Vorrichtung zum Reinigen von Abluft aus insbesondere landwirtschaftlichen Anlagen zu schaffen, die mit geringem technischem Aufwand herstellbar ist, mit optimal verteilbarer Schüttung des Filtermaterials eine in seiner Wirksamkeit verbesserte Granulat-Struktur bildet und bei geringem Wartungsaufwand eine Verwendung der Vorrichtung als Zentralabsaugung oder Umluftsystem ermöglicht.

Die Erfindung löst diese Aufgabe mit einer Vorrichtung mit den Merkmalen des Anspruchs 1. Hinsichtlich wesentlicher Ausgestaltungen dieser Vorrichtung wird auf die Ansprüche 2 bis 19 verwiesen.

Die erfindungsgemäße Vorrichtung ist als eine kompakte, transportable Behandlungsanlage ausgebildet, in deren Innenraum eine zur kontinuierlichen Reinigung des von der Abluft durchströmten Filtermaterials vorgesehene Umwälzeinheit integriert ist, so daß diese Behandlungsanlage mit Umwälzeinheit im wesentlichen unabhängig von in Gebäuden installierten Belüftungsbaugruppen einsetzbar ist. Die Anwendung dieser kompakten Behandlungsanlage ist in beliebigen Gebäuden, insbesondere landwirtschaftlichen Anlagen, ohne zusätzliche Zu- und Abluftinstallationen möglich und aufwendige Bauwerksanpassungen sind entbehrlich, da die Behandlungsanlage mit geringem Platzbedarf in vorgesehenen Einsatzräumen aufstellbar ist. Dabei sind lediglich ein Strom- und Wasseranschluß sowie ein Ablauf erforderlich.

Die an den Einsatzort verbrachte Behandlungsanlage nimmt Schadgas-Teile aus der Abluft unmittelbar am Entstehungsort auf und an diesem kann durch eine Luftumwälzung gereinigte Frischluft unmittelbar in Stallgebäuden o. dgl. bereitgestellt oder die insbesondere von lästigen Geruchsstoffen befreite Luft kann aus der Behandlungsanlage an die Umgebung abgegeben werden. Dabei wird das kontinuierlich aufzubereitende Filtermaterial innerhalb der Behandlungsanlage in einem Kreislauf gefördert. Die insbesondere an einem Filter-Granulat gebundenen Schadgas-Teile gelangen an der Unterseite der Behandlungsanlage in eine Reinigungsvorrichtung. Hier werden die Schadteile, beispielsweise in Form einer Biomasse, ausgespült und nach dieser Reinigungsphase ist das Granulat-Filtermaterial durch eine mit einer Umwälzeinheit zusammenwirkende Förderanlage oberseitig wiederholt in das FilterSystem einführbar.

Die Behandlungsanlage ist dabei aus einem rohrförmigen Außenwandteil mit einem nach dem Rohr-in-Rohr-Prinzip in dieses eingreifenden Innenwandteil aufgebaut, wobei die Rohrwände eine gasdurchlässige Lochstruktur aufweisen. Zwischen diesen beiden Rohr-Teilen ist ein vertikaler Durchlaßraum für das unter Schwerkraft verlagerbare Filtermaterial vorgegeben und dieses wird damit für den Reinigungsvorgang in einer optimalen Umströmungs-Struktur bereitgestellt. Mit geringem Aufwand ist damit eine in ihrer Filterdicke und -fläche variable Filtermaterial-Schicht in Form einer als Hohlzylinder gestapelten Granulat-Schichtung geschaffen, die wahlweise von innen nach außen bzw. von außen nach innen mit der Abluft beaufschlagt werden kann. In Strömungsrichtung hinter der vorteilhaft großflächigen Hohlzylinder-Filterschicht kann die gereinigte Frischluft aus der Behandlungsanlage entnommen und direkt am Entstehungsort in dem Gebäuderaum verteilt werden. Die zylinderförmige Außenwandung bildet damit eine nahezu den gesamten Außenumfang der Anlage umfassende Luft-Austrittsfläche bzw. Luft-Eintrittsfläche, so daß bei einem Einsatz der Anlage als Umlufteinheit eine optimale Verteilung der Reinluft in dem landwirtschaftlichen Nutzraum bewirkt wird.

Die Behandlungsanlage kann als transportable Einheit auch in einem Nebenraum des Stallgebäudes aufgestellt und als eine End-off-Pipe-Einheit eingesetzt werden. Dabei wird die Stall-Abluft in den Nebenraum eingefördert, gelangt über die Außenwandung der Behandlungsanlage in die Filterschicht und aus dieser kann die gereinigte Abluft durch den Innenraum der Behandlungsanlage direkt in die Umgebung ausgefördert werden.

Weitere Einzelheiten und vorteilhafte Wirkungen der Erfindung ergeben sich aus der nachfolgenden Beschreibung und der Zeichnung, die ein Ausführungsbeispiel der Behandlungsanlage für Abluft näher veranschaulicht. In der Zeichnung zeigen:
- Fig. 1: eine Prinzipdarstellung der Behandlungsanlage in vertikaler Gebrauchsstellung, und
- Fig. 2: eine Draufsicht der Behandlungsanlage mit oberseitig in dieser vorgesehenen Verteilbaugruppen für das gereinigte Filtermaterial.

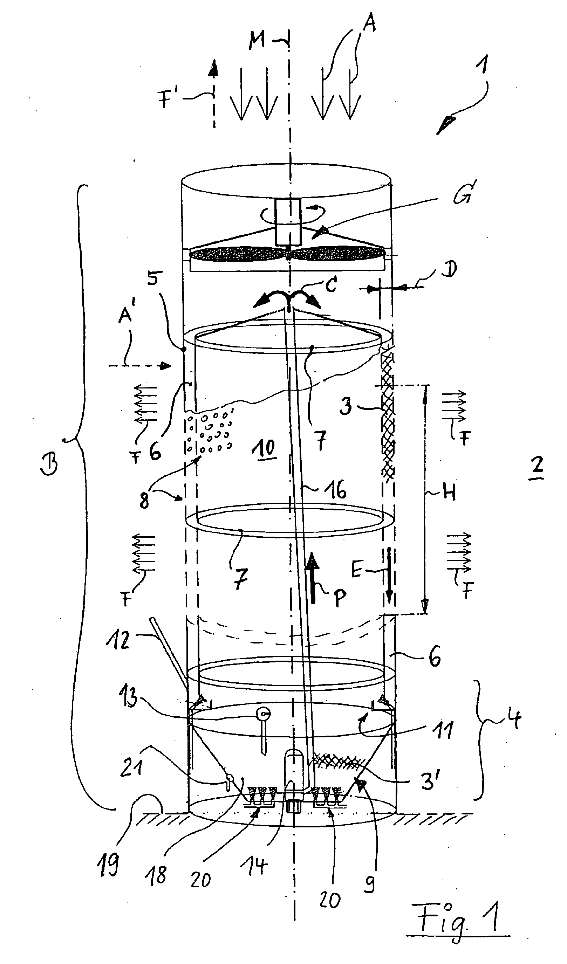

In Fig. 1 ist eine insgesamt mit 1 bezeichnete Vorrichtung zum Reinigen von mit einem Pfeil A verdeutlichter und Schadgase enthaltender Abluft dargestellt. Diese umweltbelastende Abluft A entsteht insbesondere in landwirtschaftlichen Anlagen, in denen durch Tiere, Futterstoffe, Exkremente o. dgl. zu einer geruchsintensiven Luftveränderung führen und die dabei entstehenden Schadgase eine Ausfilterung aus der Abluft A erfordern. Für diesen Vorgang sind über Gebäude-Absaugungen betriebene Filterbehälter bekannt, in denen ein von der Abluft A durchströmbares Filtermaterial in Form von Granulat o. dgl. enthalten ist. In diesem Granulat-Filtermaterial werden Schadgas-Teile durch Mikroorganismen, chemische Bindung o. dgl. aufgenommen und danach durch eine kontinuierliche Reinigung des Filtermaterials die Schadgas-Teile in Form eines als Biomasse entsorgbaren Abfallstoffes ausgespült.

Die Vorrichtung 1 ist in erfindungsgemäßer Ausführung als eine transportable Behandlungsanlage B ausgebildet. In dieser Behandlungsanlage B ist die Abluft A unmittelbar am Entstehungsort in ein Filtermaterial 3 einleitbar, so daß in der Abluft A enthaltene Schadgas-Teile im Filtermaterial 3 gebunden werden. Innerhalb der Behandlungsanlage B wird das Filtermaterial 3 einer kontinuierlichen Reinigung zugeführt und aus der Anlage B kann die gereinigte Frischluft gemäß Pfeil F direkt in die Umgebung 2 ausgefördert werden.

Das Filtermaterial 3 ist dabei in einer eine Höhe H aufweisenden Filterzone innerhalb der Vorrichtung 1 verteilt und zur Ausfilterung der durch das gebundene Schadgas verunreinigten Bestandteile des Filtermaterials 3 wird dieses innerhalb der Behandlungsanlage B in einem eine Spülreinigung 4 einschließenden Kreislauf gefördert, so daß durch eine kontinuierliche Bewegung des Filtermaterials 3 dessen einfache Wiederverwendung innerhalb der kompakten Baueinheit B erreicht ist. Die Bauteile dieser Baueinheit B sind dabei im Bereich der wesentlichen Funktionsbaugruppen aus Edelstahl hergestellt.

Die Behandlungsanlage B weist als Filterbehälter eine Doppelwand-Baugruppe auf, die aus einem rohrförmigen Außenwandteil 5 und einem innenseitig zu diesem hin einen vertikalen Durchlaßraum 6 für das Filtermaterial 3 definierenden Innenwandteil 7 gebildet ist. In Fig. 1 sind die Bauteile dieser Behandlungsanlage B in einer Prinzipdarstellung veranschaulicht, in der jeweilige Einzelteile teilweise geschnitten und durchsichtig in ihrer Einbaulage sichtbar werden.

Die mit den Pfeilen A veranschaulichte, schadgashaltige Abluft ist über eine zumindest bereichsweise gasdurchlässige Wandungsstruktur 8 (in Fig. 1 ausschnittsweise im Bereich des linken Behälterteils angedeutet) in die Filterzone H bzw. den Durchlaßraum 6 einleitbar, wobei diese Wandungsstruktur 8 den Außenwandteil 5 und/oder den Innenwandteil 7 durchlässig so begrenzt, daß die Filterzone H des Durchlaßraumes 6 wahlweise aus unterschiedlichen Förderrichtungen für den Luftstrom zugänglich ist. Daraus ergibt sich, daß die Strömungsrichtung der schadgashaltigen Abluft A auch in einer Richtung A' umschaltbar ist und damit auch die Strömungsrichtung der Frischluft F in die Richtung F' so verändert werden kann, daß die Behandlungsanlage B für unterschiedliche Anwendungsfälle einsetzbar ist

In zweckmäßiger Ausführung greifen das Außenwandteil 5 und das Innenwandteil 7 nahezu über die gesamte Höhe der Behandlungsanlage B nach dem Rohr-in-Rohr-Prinzip ineinander, wobei diese beiden Teile mit ihrem radialen Abstand D einen Durchlaßquerschnitt für den Durchlaßraum 6 vorgeben. Die beiden Wandteile 5 und 7 sind dabei als Baugruppe konzentrisch zu einer vertikalen Hochachse M der Vorrichtung 1 angeordnet. Dabei definiert der Durchlaßraum 6 in einem Teilbereich H seiner bis in den Bereich der unteren Spülreinigung 4 reichenden Gesamthöhe die eigentliche Filterzone. Denkbar ist dabei auch, daß die für die Filterzone H vorgesehenen durchlässigen Wandungsstrukturen 8 einen geringeren Bereich erfassen oder die Abluft A in den Durchlaßraum 6 in vertikaler Richtung eingepreßt und seitlich ausgeleitet wird (nicht dargestellt).

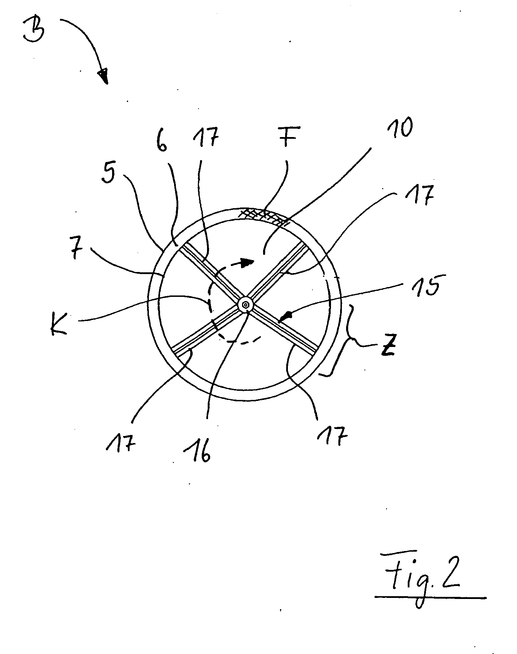

Mit der vorbeschriebenen Doppelwand-Ausführung ist das Filtermaterial 3 im Durchlaßraum 6 so angeordnet, daß eine vertikale Schichtung in Form eines von den Wandteilen 5 und 7 begrenzten Hohlzylinders (Fig. 2) gebildet wird. In diesen Hohlzylinder Z wird die Abluft A zentral eingeleitet und dabei das radial geschichtete Filtermaterial 3 im wesentlichen senkrecht zur Zylinderachse (entspricht Hochachse M) von der Abluft A durchströmt. Dabei ist eine vorteilhaft große und im wesentlichen vom Durchmesser der Behandlungsanlage B bestimmte Gesamt-Filterfläche wirksam, so daß die Behandlungsanlage B einen vorteilhaft hohen Wirkungsgrad aufweist.

Beim Einsatz der Behandlungsanlage B wird das im Bereich 4 gereinigte Filtermaterial 3' gefördert und oberseitig im Durchlaßraum 6 horizontal verteilt zugeführt (Pfeil C). Dabei wird das Filtermaterial 3 unter Schwerkraftwirkung radial und vertikal im Durchlaßraum 6 verteilt, wobei dieser Förder- und Füllvorgang durch eine gleichzeitige unterseitig im Bereich einer Reinigungsvorrichtung 9 erfolgende Entnahme des Filtermaterials 3' als kontinuierliche Kreislaufförderung ausgeführt ist. In der Reinigungsvorrichtung 9 werden aus dem Filtermaterial 3 die nicht näher dargestellten Abfallprodukte der Schadstoffbindung, beispielsweise eine durch Verstoffwechselung erzeugte Biomasse, aus dem Granulat ausgespült.

Für eine optimale Aufnahme der Schadgase in dem sich in Förderrichtung E vertikal verlagernden Filtermaterial 3 sind die beiden Wandteile 5 und 7 gegenüberliegend mit der jeweiligen gasdurchlässigen Wandungsstruktur 8 versehen, wobei diese in Form einer entsprechenden Poren-, Sieb- und/oder Lochstruktur die Gasdurchlässigkeit gewährleistet. Als besonders vorteilhaft hat sich die Anwendung von Holz-Granulat als Filtermaterial 3 erwiesen, wobei insbesondere Hartholz, Bongosiholz o. dgl. Natur-Produkte als Ausgangsmaterial verwendet werden und damit eine effiziente Bindung von staub- und geruchsintensiven Gasteilen nachweisbar ist. Die Anwendung der Behandlungsanlage B ist nicht auf die Verwendung von Natur-Granulaten beschränkt, vielmehr können auch Filtermaterialien 3 aus Kunststoffgranulat o. dgl. eingesetzt werden, so daß insbesondere Ammoniak o. dgl. intensiv riechende und reizende Gase in dem Filtermaterial 3 gebunden werden.

Die in Fig. 1 dargestellte Behandlungsanlage B ist mit Baugruppen aufgebaut, die in der dargestellten Einbaulage eine im wesentlichen ringförmige Kontur des Durchlaßquerschnittes D definieren. Ebenso ist denkbar, daß der Außenwandteil 5 und/oder der Innenwandteil 7 eine vieleckige Querschnittskontur aufweist (nicht dargestellt).

Für eine optimale Wirkung der Abluftbehandlungsanlage B wird das die hohlzylinderförmige Schichtung bildende Filtermaterial 3 bei seiner Bewegung im Durchlaßraum 6 so geführt, daß bei Verlagerung in Strömungsrichtung E eine beispielsweise vom Schadstoffgehalt der zugeführten Abluft A abhängige Verweilzeit gewährleistet ist. Das Filtermaterial 3 wird dabei mit einer gesteuerten Absenkgeschwindigkeit in die untere Reinigungsvorrichtung 9 eingeleitet. Diese Optimierung erfolgt insbesondere unter dem Aspekt, daß das Granulat-Filtermaterial 3 entsprechend seiner jeweiligen Konsistenz, insbesondere des Gewichtes, der Korngröße und/oder der Schüttdichte, einen variabel ausgeführten Durchlaßraum 6 erfordern kann, dessen konstruktive Anpassung mit geringem Aufwand so möglich ist, daß die Anwendung unterschiedlicher Filtermaterialien 3 in der Behandlungsanlage B gewährleistet wird.

In die gemäß Fig. 1 dargestellte Behandlungsanlage B wird die schadgashaltige Abluft A über einen vom Innenraum des Innenwandteils 7 gebildeten Zuführkanal 10 zentral in die Behandlungsanlage B eingeführt, wozu ein umschaltbarer Ventilator G vorgesehen ist. Die angesaugte Abluft A wird über die Filterzone H radial aus dem Zuführkanal 10 ausgepreßt, so daß die gesäuberte Abluft als Reinluft F in der unmittelbaren Umgebung 2 verteilbar ist. An seinem unteren Ende ist der Durchlaßraum 6 mit einer Regulierungsvorrichtung 11 versehen, mit der die Zufuhr (Förderrichtung E) des in diesem Bereich verunreinigten Filtermaterials 3 in die Reinigungsvorrichtung 9 drossel- bzw. freigebbar ist. Denkbar ist dabei eine nicht näher dargestellte Ringbaugruppe, eine federelastische Manschette o. dgl., womit selbsttätig durch den Gewichtsdruck des Filtermaterials oder durch ein automatisches Steuerglied eine Verengung bzw. Erweiterung des Durchlaßraumes D erfolgt. Vorteilhaft ist in diesem Bereich ein als Rohrkörper ausgeführter Steuerring (nicht dargestellt) vorgesehen, der (bei 11) mittels jeweiliger im Rohrkörper vorgesehener Luftdüsen den Austritt des Filtermaterials 3 dosiert und damit die Wechselrate des Filtermaterials 3 bestimmt wird.

Im Bereich der Spülreinigung 4 ist eine automatische Regelung der Anlage B dadurch erreicht, daß die Regulierungsvorrichtung 11 mit einer in den unteren Bereich der Filterzone H eingreifenden Schadstoffmeßsonde 12 und/oder einem Füllstandsregler 13 im Bereich der Reinigungsvorrichtung 9 zusammenwirkt. Im Bereich der Spülreinigung 4 kann durch Füllstandsdifferenzen der Anteil schlammförmiger Stoffwechsel- bzw. Abscheidungsprodukte festgestellt werden und diese werden bei Überschreitung vorgegebener Grenzwerte aus der Behandlungsanlage 1 abgeführt. Das gereinigte Filtermaterial 3' im Bereich der Reinigungsvorrichtung 9 wird mittels einer Pumpe 14 zentral in der Behandlungsanlage B hochgefördert (Pfeil P) und gelangt als Förderstrom C in den oberen Bereich der Behandlungsanlage B. Hier ist eine insgesamt mit 15 bezeichnete Verteileinheit am Ende eines Förderrohres 16 vorgesehen, so daß das Filtermaterial 3' in Pfeilrichtung C oberhalb des Durchlaßraumes 6 eine weitgehend gleichmäßige und horizontale Verteilung erfährt und die kreisringförmige Verteilung am oberen Randbereich der Hohlzylinder-Schicht erreicht wird. In zweckmäßiger Ausführung sind dabei jeweilige Verteilschienen 17 (Fig. 2), ein das Filtermaterial 3' verteilender Prallteller (nicht dargestellt) o. dgl. Bauteile vorgesehen, gegen bzw. über die der Förderstrom C geleitet wird. Die gesamte Verteileinheit 15 kann auch in einer Drehrichtung K schwenkbar sein, so daß das Filtermaterial 3' optimal verteilt wird.

Die bodenseitige Reinigungsvorrichtung 9 der Behandlungsanlage B weist einen Sammelbehälter 18 auf, an den bodenseitig eine das Granulat in Form eines Wasser-Filtermaterial-Gemisches umwälzenden Druckluftanlage 20 angeschlossen ist. Zur Entleerung der bodenseitig bei 19 abgestützten Behandlungsanlage B ist eine entsprechende Ablaßvorrichtung 21 vorgesehen.

Bei der Anwendung der Anlage 1 als Umluft-System in einem Stallgebäude können im Winterbetrieb durch eine ausgeglichene Wärmebilanz die Heizkosten gesenkt werden und im Sommerbetrieb ermöglicht die Dosierung des Spülwassers eine vorteilhafte Kühlwirkung durch die Behandlungsanlage 1.

Die Verwendung der Behandlungsanlage 1 am Ende einer am Stallgebäude vorgesehenen Abluftanlage erfolgt in einer als End-off-Pipe-System bezeichneten Zentralabsaugung, wobei das die Stallluft absaugende Gebläse (nicht dargestellt) in einem weitgehend luftdichten Nebenraum, einer Kammer o. dgl. ausmündet und hier die Stall-Abluft von außen in die Behandlungsanlage 1 gelangt, den Reinigungsprozeß durchläuft und danach die gereinigte Luft aus dem Nebenraum an die Umgebung abgegeben wird. Ebenso ist denkbar, mehrere der Behandlungsanlagen 1 parallel zu betreiben und zu deren Steuerung eine modulare Steuereinheit zu installieren.

## Patentansprüche

1. Vorrichtung zum Reinigen von Schadgase enthaltender Abluft (A) aus landwirtschaftlichen Anlagen, mit einem ein von der Abluft (A) durchströmbares Fikermaterial (3) in Form von Granulat aufnehmenden Filterbehälter, in dem zur Entfernung von ausgefilterten Schadgas-Teilen eine Spülreinigung (4) des Filtermaterials (3) vorgesfen ist, wobei das gereinigte Filtermaterial (3) in einer Filterzone (H) verteilbar und innerhalb der Behandlungsanlage (B) in einem die Spülreinigung (4) einschließenden Kreislauf kontinuierlich förderbar ist, **dadurch gekennzeichnet, daß** die Vorrichtung (1) als eine transportable Behanglungsanlage (B) mit einem rohrförmigen Außenwandteil (5) und einem innenseitig zu diesem hin einen vertikalen Durchlaßraum (6) für das Filtermaterial (3) definierenden Innenwandteil (7) ausgebildet, damit die schadgashaltige Abluft (A; A') unmittelbar am Entstehungsort in das Filtermaterial (3) einleitbar ist, dabei diese Abluft (A; A') über eine zumindest bereichsweise gasdurchlässige Wandungsstruktur (8) des Außenwandteils (5) und/oder des Innenwandteils (7) durch die Filterzone (H) des Durchlaßraumes (6) leitbar und aus diesem das Schadgas-Teile bindende Filtermaterial (3) der kontinuierlichen Reinigung innerhalb der Behandlungsanlage (B) zuführbar ist, derart, daß aus dieser Behandlungsanlage (B) gereinigte Frischluft (F; F') direkt in die Umgebung (2) ausförderbar ist.

2. Vorrichtung nach Anspruch 1, **dadurch gekennzeichnet, daß** die Behandlungsanlage (B) eine zum jeweiligen Einsatzort transportable Einheit bildet.

3. Vorrichtung nach Ansprüch 1 oder 2, **dadurch gekennzeichnet, daß** die Strömungsrichtung der in den Durchlaßraum (6) bzw. die Filterzone (H) eingeleiteten Abluft (A; A') umschaltbar ist.

4. Vorrichtung nach einem der Ansprüche 1 bis 3, **dadurch gekennzeichnet, daß** das Außenwandteil (5) und das Innenwandteil (7) als jeweilige nach dem Rohr-in-Rohr-Prinzip ineinandergreifende, mit ihrem radialen Abstand einen Durchlaßquerschnitt des Durchlaßraumes (6) vorgebende und konzentrisch zu einer vertikalen Hochachse (M) angeordnete Baugruppen ausgebildet sind.

5. Vorrichtung nach einem der Ansprüche 1 bis 4, **dadurch gekennzeichnet, daß** der Durchlaßraum (6) in einem Teilbereich seiner Höhe die Filterzone (H) definiert.

6. Vorrichtung nach einem der Ansprüche 1 bis 5, **dadurch gekennzeichnet, daß** im Durchlaßraum (6) das Filtermaterial (3) eine vertikale Schichtung in Form eines von den Wandteilen (5, 7) begrenzten Hohlzylinders (Z) bildet, in diesen die Abluft (A; A') einleitbar und die Hohlzylinder-Schicht im wesentlichen senkrecht zu ihrer vertikalen Zylinderachse (M) von der Abluft. (A; A') durchströmbar ist.

7. Vorrichtung nach einem der Ansprüche 1 bis 6, **dadurch gekennzeichnet, daß** das gereinigte Filtermaterial (3') oberseitig im Durchlaßraum (6) horizontal verteilt zuführbar, das Filtermaterial (3) unter Schwerkraftwirkung (Pfeil E) vertikal im Durchlaßraum (6) verlagerbar, unterseitig aus diesem das Filtermaterial (3) mit dem am Granulat gebundenen Schadgas entnehmbar und dieses in einer Reinigungsvorrichtung (9) ausspülbar ist.

8. Vorrichtung nach einem der Ansprüche 1 bis 7, **dadurch gekennzeichnet, daß** der Innenwandteil (7) und der Außenwandteil (5) den Durchlaßraum (6) jeweils mit einer der zumindest bereichsweise gasdurchlässigen Wandungsstrukturen (8) begrenzen und diese beiden Wandungsstrukturen (8) gegenüberliegend angeordnet sind.

9. Vorrichtung nach Anspruch 8, **dadurch gekennzeichnet, daß** die Wandungen (5, 7) mittels einer Poren-, Sieb- und/oder Lochstruktur gasdurchlässig sind.

10. Vorrichtung nach einem der Ansprüche 1 bis 9, **dadurch gekennzeichnet, daß** das Außenwandteil (5) und das Innenwandteil (7) eine zylindrische oder vieleckige Querschnittskontur aufweisen und in Einbaulage die im wesentlichen ringförmige Kontur des Durchlaßquerschnitts (D) definieren.

11. Vorrichtung nach einem der Ansprüche 1 bis 10, **dadurch gekennzeichnet, daß** der Durchlaßraum (6) das die hohlzylinderförmige Schichtung (Z) bildende Filtermaterial (3) in einer vom Schadstoffgehalt der zugeführten Abluft (A; A') abhängenden Verweilzeit aufnimmt und das Filtermaterial (3) mit gesteuerter Absenkgeschwindigkeit in die untere Reinigungsvorrichtung (9) einleitbar ist.

12. Vorrichtung nach einem der Ansprüche 1 bis 11, **dadurch gekennzeichnet, daß** der Durchlaßraum (6) in seinem Querschnittsmaß (D) entsprechend dem Gewicht, der Korngröße und/oder der Schüttdichte des Granulat-Filtermaterials (3) variabel ausführbar ist.

13. Vorrichtung nach einem der Ansprüche 1 bis 12, **dadurch gekennzeichnet, daß** die schadgashaltige Abluft (A; A') über einen vom Innenraum des Innenwandteils (7) gebildeten Zuführkanal (10) zentral in die Behandlungsanlage (B) einführbar, über die Filterzone (H) radial auspreßbar und als Reinluft (F; F') in der unmittelbaren Umgebung (2) verteilbar ist.

14. Vorrichtung nach einem der Ansprüche 1 bis 13, **dadurch gekennzeichnet, daß** der Durchlaßraum (6) an seinem unteren Ende mit einer Regulierungsvorrichtung (11) versehen ist, mit der die Zufuhr des verunreinigten Filtermaterials (3) in die Reinigungsvorrichtung (9) drossel- bzw. freigebbar ist.

15. Vorrichtung nach einem der Ansprüche 1 bis 14, **dadurch gekennzeichnet, daß** diese im Bereich der Regulierungsvorrichtung (11) mit einer in den unteren Bereich der Filterzone (H) eingreifenden Schadstoffmeßsonde (12) und/oder einem Füllstandsregler (13) im Bereich der Reinigungsvorrichtung (9) zusammenwirkt.

16. Vorrichtung nach einem der Ansprüche 1 bis 15, **dadurch gekennzeichnet, daß** das gereinigte Filtermaterial (3') mittels einer Pumpe (14) zentral im Zuführkanal (10) in der Behandlungsanlage (B) hochförderbar und mittels einer Verteileinheit (15) oberhalb des Durchlaßraumes (6) horizontal gleichmäßig verteilt in den kreisringförmigen Bereich der Hohlzylinder-Schicht (Z) zuführbar ist.

17. Vorrichtung nach einem der Ansprüche 1 bis 16, **dadurch gekennzeichnet, daß** die Reinigungsvorrichtung (9) einen Sammelbehälter (18) aufweist, an den boden-und/oder wandungsseitig eine das Wasser-Filtermaterial-Gemisch umwälzende und eine Sauerstoffanreicherung bewirkende Druckluftanlage (20) angeschossen ist.

## Claims

1. Apparatus for cleaning waste air (A) containing pollutant gases from agricultural plants, having a filter container holding a filter material (3) in granular form through which the waste air (A) is able to flow, in which filter container a means (4) for cleaning the filter material (3) by flushing is provided to remove pollutant gas components which have been filtered out, the cleaned filter material (3) being able to be distributed in a filter zone (H) and being able to be pumped continuously, within the treatment system (B), in a circuit which includes the means (4) for cleaning by flushing, **characterised in that** the apparatus (1) takes the form of a transportable treatment system (B) having a tubular outer-wall component (5) and an inner-wall component (7) which defines, on the inside of and towards the latter, a vertical space (6) for the filter material (3) to flow through, so that the waste air (A, A') containing pollutant gases is able to be introduced into the filter material (3) directly at the point of origin and, this being the case, this waste air (A, A') is able to be conveyed through the filter zone (H) of the space (6) for through-flow via a wall-structure (8) of the outer-wall component (5) and/or of the inner-wall component (7) which is permeable to gas at least in a region or regions, and the said filter material (3) which binds the pollutant gas components is able to be fed, within the treatment system B, from the space (6) for through-flow to the means for continuous cleaning, in such a way that the cleaned fresh air (F, F') from the said treatment system (B) can be pumped out directly into the surroundings (2).

2. Apparatus according to claim 1, **characterised in that** the treatment system (B) forms a unit which can be transported to the given place of use.

3. Apparatus according to claim 1 or 2, **characterised in that** the direction of flow of the waste air (A, A') which is introduced into the space (6) for through-flow, i.e. the filter zone (H), can be changed over.

4. Apparatus according to one of claims 1 to 3, **characterised in that** the outer-wall component (5) and inner-wall component (7) take the form of respective subassemblies which fit into one another on the tube-in-tube principle, which preset a cross-section for through-flow for the space (6) for through-flow by their radial spacing, and which are arranged to be concentric to a vertical heightwise axis (M).

5. Apparatus according to one of claims 1 to 4, **characterised in that** the space (6) for through-flow defines the filter zone (H) in a sub-division of its height.

6. Apparatus according to one of claims 1 to 5, **characterised in that**, in the space (6) for through-flow, the filter material (3) forms a vertical layered arrangement in the form of a hollow cylinder (Z) which is bounded by the wall components (5, 7), the waste air (A, A') can be introduced into this hollow cylinder (Z), and the waste air (A, A') is able to flow through the hollow cylindrical layer substantially perpendicularly to the vertical axis (M) of the cylinder formed by the latter.

7. Apparatus according to one of claims 1 to 6, **characterised in that** the cleaned filter material (3') can be fed in at the top of the space (6) for through-flow by being horizontally distributed, the filter material (3) can be displaced vertically in the space (6) for through-flow under the prompting of gravity (arrow E), and the pollutant gas bound to the granular material can be withdrawn from the said space (6) for through-flow at the bottom and can be flushed off in a cleaning arrangement (9).

8. Apparatus according to one of claims 1 to 7, **characterised in that** the inner-wall component (7) and the outer-wall component (5) bound the space (6) for through-flow by respective ones of the wall structures (8) which are permeable to gas at least in a region or regions, and these two wall structures (8) are arranged opposite one another.

9. Apparatus according to claim 8, **characterised in that** the walls (5, 7) are permeable to gas by virtue of a pored, screen-type and/or holed structure.

10. Apparatus according to one of claims 1 to 9, **characterised in that** the inner-wall component (7) and the outer-wall component (5) have a cylindrical or polygonal outline in cross-section and, in the installed position, define the substantially annular outline of the cross-section (D) for through-flow.

11. Apparatus according to one of claims 1 to 10, **characterised in that** the space (6) for through-flow holds the filter material (3) which forms the hollow cylindrical layered arrangement (Z) for a time of residence which depends on the pollutant content of the infed waste air (A, A'), and the filter material (3) can be introduced into the cleaning arrangement (9) at the bottom at a controlled velocity of descent.

12. Apparatus according to one of claims 1 to 11, **characterised in that** the space (6) for through-flow is designed for its cross-sectional dimension (D) to be variable in line with the weight, grain size and/or bulk density of the granular filter material (3).

13. Apparatus according to one of claims 1 to 12, **characterised in that** the waste air (A, A') containing pollutant gases can be introduced centrally into the treatment system (B) via an infeed duct (10) which is formed by the interior of the inner-wall component (7), can be forced out radially via the filter zone (H), and can be distributed in the immediate surroundings (2) as clean air (F, F').

14. Apparatus according to one of claims 1 to 13, **characterised in that** the space (6) for through-flow is provided at its bottom end with a regulating arrangement (11) by which the infeed of the polluted filter material (3) into the cleaning arrangement (9) can be throttled or released.

15. Apparatus according to one of claims 1 to 14, **characterised in that** it cooperates, in the region of the regulating arrangement (11), with a pollutant measuring probe (12) which engages in the bottom region of the filter zone (H) and/or with a level regulator (13) in the region of the cleaning arrangement (9).

16. Apparatus according to one of claims 1 to 15, **characterised in that** the cleaned filter material (3') can be pumped upwards centrally in the treatment system (B), in the infeed duct (10), by means of a pump (14), and can be fed into the annular region of the hollow cylindrical layer (Z) with a uniform horizontal distribution by means of a distributing unit (15) above the space (6) for through-flow.

17. Apparatus according to one of claims 1 to 16, **characterised in that** the cleaning arrangement (9) has a collecting container (18) to which is connected, at the floor end and/or on the wall side, a compressed air system (20) which swirls round the mixture of water and filter material and which causes an oxygen enrichment.

## Revendications

1. Dispositif de purification de gaz d'échappement (A) d'installations agricoles contenant des gaz nocifs, comportant un matériau de filtrage (3) pouvant être traversé par les gaz d'échappement (A) sous la forme de support de filtre recevant des granulés, dans lequel pour éliminer les particules de gaz nocifs filtrées, un nettoyage par rinçage (4) du matériau de filtrage (3) est prévu, le matériau de filtrage purifié (3) pouvant être réparti dans une zone de filtrage (H) dans une installation de traitement (B), et pouvant être acheminé en continu dans un circuit comprenant le nettoyage par rinçage (4), **caractérisé en ce que** le dispositif (1) est constitué en tant qu'installation de traitement transportable (B) avec une partie de paroi externe (5) en forme de tube et avec une partie de paroi interne (7) définissant vers l'intérieur de celle-ci, un espace de passage vertical (6) pour le matériau de filtrage (3) afin que les gaz d'échappement contenant les gaz nocifs (A ; A') puissent être acheminés immédiatement au site de provenance dans le matériau de filtrage (3), ces gaz d'échappement (A ; A') pouvant être conduits par au moins une structure de paroi (8) de la partie de paroi externe (5) et/ou de la paroi interne (7) perméable aux gaz au moins par endroit, au travers de la zone de filtrage (H) de l'espace de passage (6) et à partir de celui-ci, le matériau de filtrage (3) fixant les particules de gaz nocifs du nettoyage pouvant être acheminé en continu au sein de l'installation de traitement (B) de telle sorte qu'à partir de cette installation de traitement (B), de l'air frais purifié (F ; F') puisse être rejeté directement dans l'environnement (2).

2. Dispositif selon la revendication 1, **caractérisé en ce que** l'installation de traitement (B) forme une unité transportable au lieu d'utilisation respectif.

3. Dispositif selon la revendication 1 ou 2, **caractérisé en ce que** la direction d'écoulement des gaz d'échappement (A ; A') acheminés dans l'espace de passage (6) ou la zone de filtrage (H) peut être commutée.

4. Dispositif selon l'une des revendications 1 à 3, **caractérisé en ce que** la partie de paroi externe (5) et la partie de paroi interne (7) sont conçues comme des éléments respectivement en prise l'un dans l'autre selon le principe de tube dans tube, constituant avec leur distance radiale, une section de passage de l'espace de passage (6) et disposées de façon concentrique par rapport à un axe vertical (M).

5. Dispositif selon l'une des revendications 1 à 4, **caractérisé en ce que** l'espace de passage (6) définit dans une zone partielle de sa hauteur, la zone de filtrage (H).

6. Dispositif selon l'une des revendications 1 à 5, **caractérisé en ce que** dans l'espace de passage (6), le matériau de filtrage (3) forme un revêtement vertical sous la forme d'un cylindre creux (Z) limité par les parties de parois (5, 7) dans lequel les gaz d'échappement (A ; A') peuvent être acheminés et la couche de cylindre creux pouvant être traversée de façon essentiellement perpendiculaire par rapport à leur axe de cylindre vertical (M) par les gaz d'échappement (A ; A').

7. Dispositif selon l'une des revendication 1 à 6, **caractérisé en ce que** le matériau de filtrage purifié (3') peut être acheminé par le haut dans l'espace de passage (6) réparti horizontalement, le matériau de filtrage (3) peut être déplacé verticalement sous l'effet de la force de gravité (flèche E) dans la zone de passage (6), il peut être ressorti par le bas avec les gaz nocifs liés aux granulés de ce matériau de filtrage (3) et celui-ci peut être rincé dans un dispositif de nettoyage (9).

8. Dispositif selon l'une des revendications 1 à 7, **caractérisé en ce que** la partie de paroi interne (7) et la partie de paroi externe (5) limitent l'espace de passage (6) respectivement avec l'une des structures de paroi (8) au moins partiellement perméable aux gaz et ces deux structures de paroi (8) sont disposées l'une face à l'autre.

9. Dispositif selon la revendication 8, **caractérisé en ce que** les parois (5, 7) sont perméables aux gaz grâce à une structure à pores, à tamis et/ou à perforations.

10. Dispositif selon l'une des revendications 1 à 9, **caractérisé en ce que** la partie de paroi externe (5) et la partie de paroi interne (7) présentent un contour à section cylindrique ou carrée et définissent en position de montage le contour essentiellement circulaire de la section de passage (D).

11. Dispositif selon l'une des revendications 1 à 10, **caractérisé en ce que** l'espace de passage (6) reçoit le matériau de filtrage (3) formant la couche en forme de cylindre creux (Z) en une durée de séjour dépendant de la teneur en substances nocives des gaz d'échappement acheminés (A ; A') et le matériau de filtrage (3) peut être conduit avec une vitesse d'affaissement commandée dans le dispositif de purification inférieur (9).

12. Dispositif selon l'une des revendications 1 à 11, **caractérisé en ce que** l'espace de passage (6) peut être réalisé de façon variable dans sa dimension de section (D) selon le poids, la dimension des particules et/ou la densité en vrac du matériau de filtrage en granulés (3) .

13. Dispositif selon l'une des revendications 1 à 12, **caractérisé en ce que** les gaz d'échappement contenant des gaz nocifs (A ; A') peuvent être introduits par un canal d'amenée (10) formé de l'espace intérieur de la partie de paroi interne (7) de façon centrale dans l'installation de traitement (B), peuvent être exprimés radialement sur la zone de filtrage (H) et peuvent être répartis en tant qu'air pur (F ; F') dans l'environnement immédiat (2).

14. Dispositif selon l'une des revendications 1 à 13, **caractérisé en ce que** l'espace de passage (6) est doté à son extrémité inférieure d'un dispositif de régulation (11) avec lequel l'apport du matériau de filtrage pollué (3) peut être bloqué ou libéré dans le dispositif de purification (9).

15. Dispositif selon l'une des revendications 1 à 14, **caractérisé en ce que** celui-ci coopère dans la zone du dispositif de régulation (11) avec une sonde de mesure des substances nocives (12) en prise avec l'une des zones de filtrages (H) dans la zone inférieure et/ou avec un contrôleur de niveau (13) dans la zone du dispositif d'épuration (9).

16. Dispositif selon l'une des revendications 1 à 15, **caractérisé en ce que** le matériau de filtrage purifié (3') peut être acheminé au moyen d'une pompe (14) au niveau central dans le canal d'amenée (10) dans l'installation de traitement (B) et conduit au moyen d'une unité de répartition (15) au dessus de l'espace de passage (6) réparti uniformément sur le plan horizontal dans la zone circulaire de la couche de cylindre creux (Z).

17. Dispositif selon l'une des revendications 1 à 16, **caractérisé en ce que** le dispositif de purification (9) présente un collecteur (18) auquel est raccordé au niveau du sol et/ou de la paroi, une installation d'air comprimé (20) recyclant le mélange eau-matériau de filtrage et entraînant un enrichissement en oxygène.
